# EUROPEAN PATENT APPLICATION

(11) **EP 4 521 538 A1**
(43) Date of publication of application: **12.03.2025**
(21) Application number: 22968346.1
(22) Date of filing: 30.12.2022
(51) Int. Cl.: H01M 50/358, H01M 50/249, H01M 50/258

(54) **BATTERY PACK**

(30) Priority: 14.12.2022 CN 202211598515
(71) Applicant: Eve Power Co., Ltd., Jingmen, Hubei 448000 (CN)
(72) Inventor: HUANG, Weicai, Jingmen, Hubei 448000 (CN)
(74) Representative: Herrero & Asociados, S.L.
(86) International application number: PCT/CN2022/144223
(87) International publication number: WO 2024/124645

(57) **Abstract**

A battery pack, includes: a battery module, which includes a pair of battery assemblies, where each battery assembly includes a support tray and a cell group; the support tray is penetrated with a plurality of through holes, pressure relief valves of a plurality of cells in the cell group are arranged at the plurality of through holes in a one-to-one correspondence manner, the pressure relief valves of a pair of cell groups are arranged facing each other, and the support tray is provided with a plurality of pressure relief holes; a module bracket, which is provided with first pressure relief channels, where a pressure relief cavity is provided between a pair of support trays, and the through holes, the pressure relief cavity, the first pressure relief channels and the pressure relief holes are in communication; and a box, where the battery module is arranged in the box, the box is provided with third pressure relief channels, and the third pressure relief channels are in communication with the pressure relief holes.

## Description

The present disclosure claims priority to Chinese Patent Application No. 202211598515.7, filed to the Chinese Patent Office on December 14, 2022, the disclosure of which is incorporated herein by reference in its entirety.

### TECHNICAL FIELD

The present disclosure relates to the technical field of battery packs, and in particular, to a battery pack.

### BACKGROUND

In recent years, the demand for lightweight vehicles has been increasing. Especially in the field of new energy vehicles, the endurance range has always been a bottleneck restricting performance development. In related technologies, improving the endurance range usually starts from the perspective of increasing the total energy of the battery, which usually includes increasing the energy density of the battery pack or increasing the number of modules. In order to improve the space utilization of electric vehicles, a double-layer module is usually arranged. The appearance of the double-layer module structure can effectively utilize the envelope space and improve the endurance range of electric vehicles.

In the design process of double-layer module battery packs in related technologies, it is usually difficult to design a special exhaust and pressure relief channel due to difficulty in sealing. Due to the lack of special exhaust and pressure relief channels in the battery pack with a double-layer module, when the cells in the module experience thermal runaway, a large amount of gas accompanied by flames is instantly released from the cells. Due to the lack of directional exhaust channels to guide away these gases and flames, they will randomly spread inside the battery pack, which can easily ignite other components and cause thermal runaway in other normally used cells, causing the thermal runaway to spread and easily lead to fire or explosion, thus, there is room for improvement.

### SUMMARY

In a aspect, the present disclosure provides a battery pack to prevent thermal runaway from spreading.

The battery pack includes:
a battery module, including a pair of battery assemblies stacked along a height direction;
where each of the battery assemblies includes a support tray and a cell group; where the support tray is penetrated with a plurality of through holes along its height direction, and pressure relief valves of a plurality of single cells in the cell group are arranged at the plurality of through holes in a one-to-one correspondence manner, and the pressure relief valves of a pair of cell groups arranged along the height direction are arranged facing each other; and the support tray is further provided with a plurality of pressure relief holes;
a module bracket is arranged between a pair of the support trays arranged along the height direction, and the module bracket is provided with first pressure relief channels; where a pressure relief cavity is arranged between a pair of the support trays arranged along the height direction, and the through holes, the pressure relief cavity, the first pressure relief channels and the pressure relief holes are in communication;
a box, where the battery module is arranged in the box, and the box is provided with a third pressure relief channel, and the third pressure relief channel is in communication with the pressure relief holes.

In one embodiment, each of the supporting trays includes a tray body formed with a mounting groove and tray extension members arranged at circumferential edges of the tray body. Each of the tray bodies is penetrated by a plurality of the through holes along its own height direction. The pressure relief cavity is formed between a pair of the tray bodies arranged along the height direction, and the module bracket is arranged between a pair of the tray extension members arranged along the height direction.

In one embodiment, the tray extension member and the module bracket are both in a rectangular ring shape.

In one embodiment, it further includes: a fireproof board arranged between a pair of the tray bodies arranged along the height direction, and the through holes of the upper tray body and the through holes of the lower tray body are separated by the fireproof board.

In one embodiment, the box is provided with side beams and a plurality of first cross beams; where the side beams are enclosed to form a frame structure; the side beams are provided with the third pressure relief channels;
the plurality of the first cross beams are arranged inside the frame structure and connected to the side beams, the plurality of the first cross beams separate a plurality of areas in the frame structure, and each of the areas is provided with the battery module.

In one embodiment, the first cross beam is provided with a second pressure relief channel, and the first pressure relief channel, the pressure relief hole, the second pressure relief channel and the third pressure relief channel are in communication.

In one embodiment, a pair of the supporting trays arranged along the height direction are symmetrically arranged, and the tray extension member located at a lower side is provided with a plurality of the pressure relief holes. The pressure relief holes, the second pressure relief channel and the third pressure relief channel.

In one embodiment, the side beam is provided with an explosion-proof valve, and the explosion-proof valve is communicated with the third pressure relief channel.

In one embodiment, the module bracket and a pair of the tray extension members arranged along the height direction are connected by locking members to clamp the fireproof board.

In summary, the battery pack provided in the embodiments of the present disclosure has the following beneficial effects:

In actual applications, in the double-layer battery assemblies in the battery pack of the embodiments of the present disclosure, the cells in the battery assemblies are cylindrical cells. Since the explosion-proof valve of the cylindrical cell is arranged at a bottom of the cell itself, the double-layer battery assemblies adopt an installation structure in which the bottoms of the cells are arranged facing each other. When the battery experiences thermal runaway, the gas and flame generated will be concentrated through the through hole in the pressure relief cavity formed between the pair of the support trays arranged along the height direction, and then the gas and flame generated will flow to the first pressure relief channel of the module bracket, and then flow to the pressure relief hole of the support tray, and finally flow into the third pressure relief channel of the box. These gases and flames are guided away through the third pressure relief channel, which effectively prevents the gas and flame from spreading randomly inside the battery pack, effectively prevents the spread of thermal runaway, and prevents more serious fires or explosions.

Additional aspects and advantages of the present disclosure will be given in part in the description below, and in part will become apparent from the description below, or will be learned through the practice of the present disclosure.

### BRIEF DESCRIPTION OF THE DRAWINGS

FIG. 1 is a schematic structural diagram of a battery pack in embodiments of the present disclosure;
FIG. 2 is a schematic diagram of the internal structure of a battery pack in embodiments of the present disclosure;
FIG. 3 is a partial enlarged view of A in FIG. 2;
FIG. 4 is another schematic diagram of the internal structure of a battery pack in embodiments of the present disclosure;
FIG. 5 is a schematic structural diagram of a support tray in embodiments of the present disclosure;
FIG. 6 is a schematic structural diagram of a module bracket in embodiments of the present disclosure;

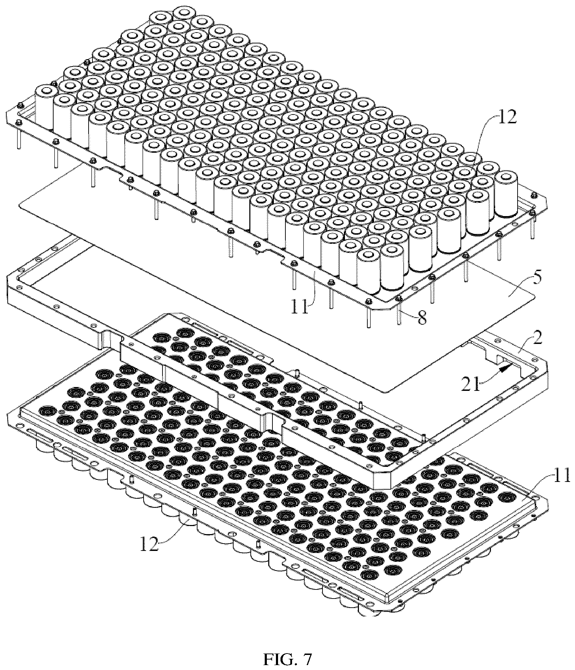

FIG. 7 is a schematic diagram of a disassembled state of a battery pack in embodiments of the present disclosure;

Reference numerals in the drawings: 1, battery assembly; 11, support tray; 111, through hole; 112, pressure relief hole; 113, tray body; 114, tray extension member; 12, cell group; 2, module bracket; 21, first pressure relief channel; 3, pressure relief cavity; 4, first cross beam; 41, second pressure relief channel; 5, fireproof board; 6, box; 7, side beam; 71, third pressure relief channel; 72, explosion-proof valve; 8, locking member.

### DETAILED DESCRIPTION

In the description of the present disclosure, it should be noted that orientations or positional relationships indicated by terms such as "up", "down", "front", "back", "left", "right", "vertical", "horizontal", "top", "bottom", "inside", "outside", etc., are based on the orientations or positional relationships shown in the accompanying drawings, and are merely for the convenience of describing the present disclosure and simplifying the description, rather than indicating or implying that the referred device or element must have a specific orientation, be constructed and operated in a specific orientation, and therefore should not be understood as a limitation on the present disclosure.

Unless otherwise defined, all technical and scientific terms used herein have the same meaning as commonly understood by one of ordinary skill in the art to which this disclosure belongs. The terms used herein in the description of the present disclosure are for the purpose of describing specific embodiments only and are not intended to limit the present disclosure.

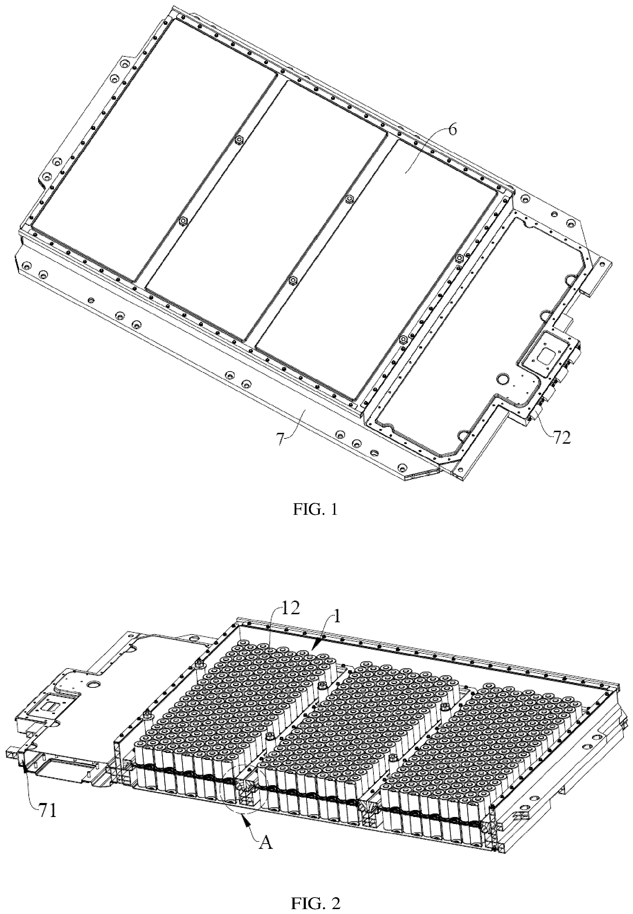

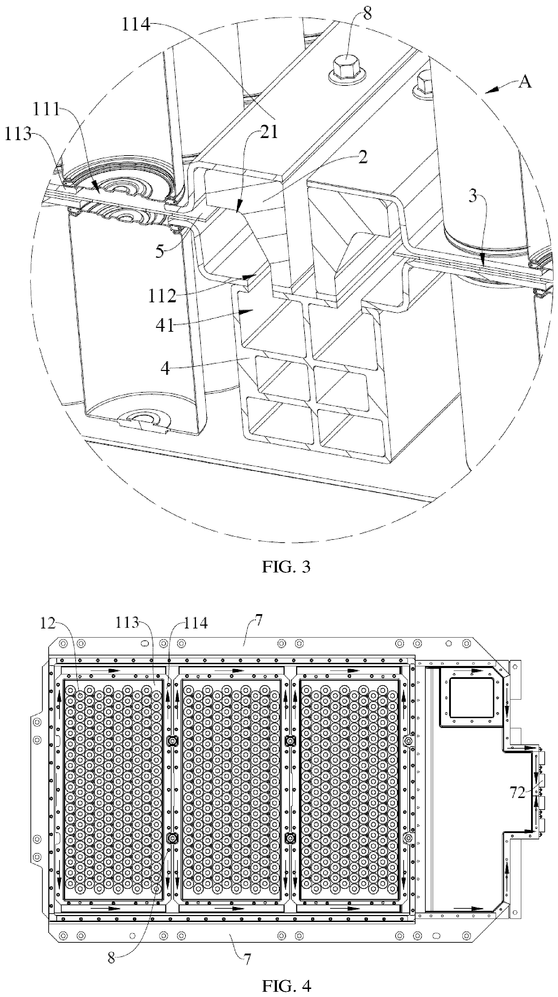

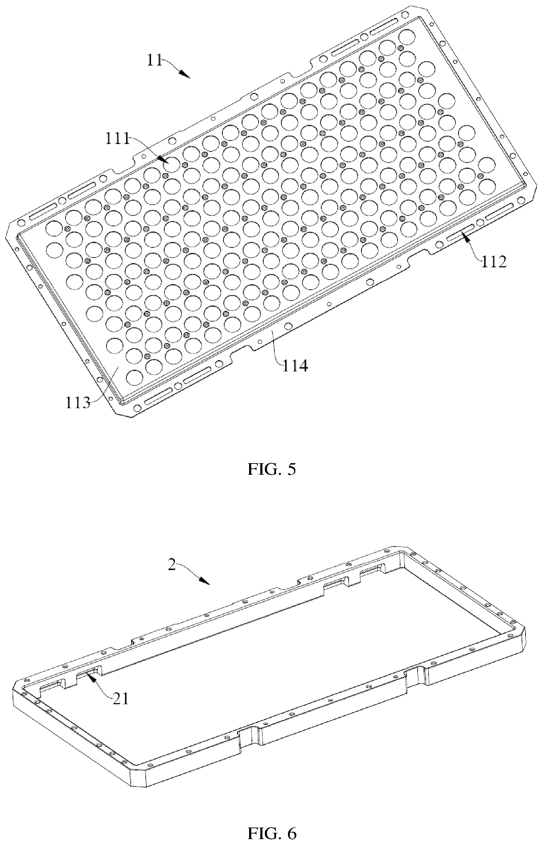

A battery pack and an electrical device according to the embodiments of the present disclosure will be described below with reference to FIGs. 1 to 6. Some embodiments of the present disclosure will be described in detail below with reference to the accompanying drawings. In the absence of conflict, the following embodiments and features in the embodiments may be combined with each other.

In recent years, the demand for lightweight vehicles has been increasing. Especially in the field of new energy vehicles, the endurance range has always been a bottleneck restricting performance development. In related technologies, improving the endurance range usually starts from the perspective of increasing the total energy of the battery, which usually includes increasing the energy density of the battery pack or increasing the number of modules. In order to improve the space utilization of electric vehicles, a double-layer module is usually arranged. The appearance of the double-layer module structure can effectively utilize the envelope space and improve the endurance range of electric vehicles.

In the design process of battery packs with double-layer modules in related technologies, it is usually difficult to design special exhaust and pressure relief channels due to difficulty in sealing. Due to the lack of special exhaust and pressure relief channels in the battery pack with a double-layer module, when the cells in the module experience thermal runaway, a large amount of gas accompanied by flames is instantly released from the cells. Due to the lack of directional exhaust channels to guide away these gases and flames, they will randomly spread inside the battery pack, which can easily ignite other components and cause thermal runaway in other normally used cells, causing the thermal runaway to spread and easily lead to fire or explosion, thus, there is room for improvement.

In view of this, the battery pack in the embodiments of the present disclosure is designed with special exhaust and pressure relief structures for the double-layer module, so as to guide away these gases and flames in a directed manner when thermal runaway occurs to prevent the spread of thermal runaway.

Specifically, please refer to FIGs. 1 to 6, in the battery pack of the embodiments of the present disclosure, each support tray 11 includes a tray body 113 formed with a mounting groove and a tray extension member 114 arranged at circumferential edges of the tray body 113. Each tray body 113 is provided with the plurality of through holes 111 running through its own height direction. The pressure relief cavity 3 is formed between a pair of tray bodies 113 arranged along the height direction, and the module bracket 2 is arranged between a pair of tray extension members 114 arranged along the height direction.

In actual applications, the battery module of the battery pack in the embodiments of the present disclosure is provided with a pair of support trays 11. Due to the tray body 113 with the mounting groove being formed on the support tray 11, this means that the tray body 113 itself has a certain height, so that an installation gap is formed between the pair of tray extension members 114 for installing the module bracket 2. Therefore, the cell group 12 is correspondingly installed in the mounting groove of the tray body 113, the module bracket 2 is correspondingly installed on the tray extension members 114, and the cell group 12 is relatively arranged in the module bracket 2, so that the cell group 12 and the module bracket 2 partially overlap in height, making the structure more compact, reducing the thickness of the battery pack to a certain extent, and achieving miniaturization and portability.

Specifically, please refer to FIGs. 1 to 6, the battery pack in the embodiments of the present disclosure includes battery module, a module bracket 2 and a box 6.

In one embodiment, the battery module includes a pair of battery assemblies 1 stacked up and down along a height direction. Each battery assembly 1 includes a support tray 11 and a cell group 12. The support tray 11 is penetrated with a plurality of through holes 111 along its own height direction. The pressure relief valves of a plurality of cells in the cell group 12 are arranged at the plurality of through holes 111 in a one-to-one correspondence manner, and the pressure relief valves of a pair of cell groups 12 arranged along the height direction are arranged facing each other. The support tray 11 is further provided with a plurality of pressure relief holes 112. A module bracket 2 is arranged between a pair of support trays 11 arranged along the height direction, and the module bracket 2 is provided with first pressure relief channels 21. where a pressure relief cavity 3 is provided between a pair of support trays 11 arranged along the height direction. The through holes 111, the pressure relief cavity 3, the first pressure relief channels 21 and the pressure relief holes 112 are in communication. The battery module is arranged in the box 6. The box 6 is provided with third pressure relief channels 71, and the third pressure relief channels 71 are in communication with the pressure relief holes 112.

In actual applications, in the double-layer battery assemblies 1 in the battery pack of the embodiments of the present disclosure, the cells in the battery assemblies 1 are cylindrical cells. Since the pressure relief valve of the cylindrical cell is arranged at a bottom of the cell itself, the double-layer battery assemblies 1 adopt an installation structure in which the bottoms of the cells are arranged facing each other. When the battery experiences thermal runaway, the gas and flame generated will be concentrated through the through hole 111 in the pressure relief cavity 3 formed between the pair of the support trays 11 arranged along the height direction, and then the gas and flame generated will flow to the first pressure relief channel 21 of the module bracket 2, and then flow to the pressure relief hole 112 of the support tray 11, and finally flow into the third pressure relief channel 71 of the box 6. These gases and flames are guided away through the third pressure relief channel 71, effectively preventing the gas and flame from spreading randomly inside the battery pack, effectively preventing the spread of thermal runaway, and preventing more serious fires or explosions.

It was found in further applications that the arrangement of a double-layer module in the battery pack can effectively improve the endurance range of electric vehicles, but it will increase the thickness of the battery pack. Therefore, in order to reduce the overall thickness of the battery pack, the structure of the support tray 11 is improved, and the installation position of the module bracket 2 is also adjusted accordingly, which reduces the thickness of the battery pack to a certain extent and achieves miniaturization and portability.

Specifically, please refer to FIGs. 1 to 6, in the battery pack of the embodiments of the present disclosure, each support tray 11 includes a tray body 113 formed with a mounting groove and a tray extension member 114 arranged at circumferential edges of the tray body 113. Each tray body 113 is provided with the plurality of through holes 111 running through its own height direction. The pressure relief cavity 3 is formed between a pair of tray bodies 113 arranged along the height direction, and the module bracket 2 is arranged between a pair of tray extension members 114 arranged along the height direction.

In actual applications, the battery module of the battery pack in the embodiments of the present disclosure is provided with a pair of support trays 11. Due to the tray body 113 with the mounting groove being formed on the support tray 11, this means that the tray body 113 itself has a certain height, so that an installation gap is formed between the pair of tray extension members 114 for installing the module bracket 2. Therefore, the cell group 12 is correspondingly installed in the mounting groove of the tray body 113, the module bracket 2 is correspondingly installed on the tray extension members 114, and the cell group 12 is relatively arranged in the module bracket 2, so that the cell group 12 and the module bracket 2 partially overlap in height, making the structure more compact, reducing the thickness of the battery pack to a certain extent, and achieving miniaturization and portability.

It can be understood that when the battery experiences thermal runaway, the gas and flame generated will be concentrated in the pressure relief cavity 3, and then the gas and flame generated will flow toward edges of the support tray 11, then flow to the first pressure relief channel 21 of the module bracket 2, and then flow to the pressure relief hole 112 of the support tray 11, and finally flow into the third pressure relief channel 71 of the box 6. These gases and flames are guided away through the third pressure relief channel 71, effectively preventing the gas and flame from spreading randomly inside the battery pack, effectively preventing the spread of thermal runaway, and preventing more serious fires or explosions.

Existing battery packs are usually made into a square shell shape. In order to adapt to the square shell shape, in the battery pack of the embodiments of the present disclosure, the tray extension member 114 and the module bracket 2 are both in a rectangular ring shape.

Of course, in some other embodiments, the tray extension member 114 and the module bracket 2 may be in a circular shape.

It was found in further applications that due to the double-layer module configuration is employed in the battery pack, when the cells in one layer of cell group 12 experience thermal runaway, the gas and flame generated will spray toward bottoms of the cells in an opposite cell group 12, thereby causing thermal runaway. Therefore, in order to prevent thermal runaway caused by the gas and flame generated spraying to the bottoms of the cells of the opposite module, the battery pack is blocked by setting a fireproof board 5, to prevent the thermal runaway from spreading between the double-layer module.

Specifically, please refer to FIGs. 1 to 6, the battery pack in the embodiments of the present disclosure further includes a fireproof board 5. The fireproof board 5 is arranged between a pair of tray bodies 113 arranged along the height direction. The through holes 111 of the upper tray body 113 and the through holes 111 of the tray body 113 are separated by the fireproof board 5.

In actual applications, when thermal runaway occurs in the cells in one layer of cell group 12 of the battery pack in the embodiments of the present application, the gas and flame generated will spray toward the fireproof board 5, flow along the fireproof board 5 toward the edges of the support tray 11, then flow to the first pressure relief channel 21 of the module bracket 2, and then flow into the pressure relief hole 112 of the support tray 11, and finally flow into the third pressure relief channel 71 of the box 6. These gases and flames are guided away through the third pressure relief channel 71, effectively preventing the gases and flames from spreading randomly inside the battery pack, effectively preventing the spread of thermal runaway, and preventing more serious fires or explosions. In addition, it also effectively prevents thermal runaway caused by the gas and flame generated spraying to the bottoms of the cells of the opposite module, and prevents the thermal runaway from spreading between the double-layer module.

The fireproof board 5 may be a mica board, for example, a high-temperature resistant mica board, which may be formed by bonding, heating and pressing mica paper and organic silicone glue, where the mica content is about 90% and the organic silicone glue content is 10%.

It was found in further applications that in order to increase the battery capacity of the battery pack, a plurality of battery modules are usually arranged in the battery pack. In order to enable the plurality of battery modules to reasonably discharge the gas and flame generated when thermal runaway occurs, the battery pack improves the structure of the box 6.

Specifically, please refer to FIGs. 1 to 6, in the battery pack in the embodiments of the present disclosure, the box 6 is provided with side beams 7 and a plurality of first cross beams 4. The side beams 7 are enclosed to form a frame structure. The side beams 7 are provided with the third pressure relief channels 71. The plurality of first cross beams 4 are arranged inside the frame structure and connected to the side beams 7. The plurality of first cross beams 4 separate a plurality of areas within the frame structure, and each of the areas is provided with the battery module.

In other embodiments, the first cross beam 4 is provided with a second pressure relief channel 41. The first pressure relief channel 21, the pressure relief hole 112, the second pressure relief channel 41 and the third pressure relief channel 71 are in communication.

In actual applications, the plurality of battery modules and the plurality of first cross beams 4 of the battery pack in the embodiments of the present disclosure are arranged at staggered intervals, so that each battery module is arranged between two first cross beams 4. When the battery experiences thermal runaway, the gas and flame generated will be concentrated through the through holes 111 in the pressure relief cavity 3 formed between a pair of the support trays 11 arranged along the height direction, and then the gas and flame generated will flow to the first pressure relief channel 21 of the module bracket 2, and then flow to the pressure relief hole 112 of the support tray 11, first flow into the second pressure relief channel 41 of the first cross beam 4, and then flow into the third pressure relief channel 71 of the box 6. These gases and flames are guided away through the third pressure relief channel 71, effectively preventing the gas and flame from spreading randomly inside the battery pack, effectively preventing the spread of thermal runaway, and preventing more serious fires or explosions.

Moreover, from a positional point of view, the gas and flame generated by the battery module will flow to the first cross beams 4 on both sides, and then be guided away through the second pressure relief channel 41, effectively preventing the gas and flame from spreading randomly inside the battery pack, and effectively preventing the spread of thermal runaway, so as to prevent more serious fires or explosions.

A flow guide structure of the gas and flame generated can be specifically referred to FIGs. 1 to 6. The side beam 7 is provided with an exhaust hole, which is in communication with the outside of the box and the third pressure relief channel 71. The exhaust hole is blocked with an explosion-proof valve 72, and the explosion-proof valve 72 is in communication with the third pressure relief channel 71. The side beam 7 may be specifically in a concave shape.

In actual applications, when thermal runaway occurs in the battery module, the gas and flame generated will flow to the second pressure relief channel 41 in the first cross beam 4, and then flow to the third pressure relief channel 71 of the side beam 7, and finally explode at the explosion-proof valve 72, automatically opens to release pressure, so as to prevent the battery pack from exploding.

It was found in further applications that since the fireproof board 5 is arranged between a pair of tray bodies 113 arranged along the height direction, the gas and flame generated would spray toward the fireproof board 5 when thermal runaway occurs. Therefore, the fireproof board 5 needs to be fixed to prevent it from deflecting caused by being sprayed during thermal runaway. The battery pack clamps the fireproof board 5 through a clamping structure to fix the fireproof board 5.

Specifically, please refer to FIGs. 1 to 6, in the battery pack in the embodiments of the present disclosure, the module bracket 2 and a pair of tray extension members 114 arranged along the height direction are connected by locking members 8 to clamp the fireproof board 5.

In actual application, the battery pack locks a pair of tray extension members 114 to the module bracket 2 through the locking members 8, and then clamps the fireproof board 5 through the pair of tray bodies 113 to achieve the fixation of the fireproof board 5 and prevent it from being deflecting caused by sprayed during thermal runaway. The locking member 8 may be specifically a bolt or a screw.

The embodiments of the present disclosure disclose not only a battery pack, but also an electrical device including the battery pack. The electrical device may be, but is not limited to, a mobile phone, a tablet, a laptop, an electric toy, an electric tool, an electric vehicle, an electric car, a ship, a spacecraft, etc. The electric toy may include a fixed or mobile electric toy, such as a game console, an electric car toy, an electric ship toy and an electric airplane toy, etc. The spacecraft may include an airplane, a rocket, a space shuttle and a spaceship, etc. The power tool includes a metal-cutting power tool, a grinding power tool, an assembly power tool and a railway power tool, such as an electric drill, an electric grinder, an electric wrench, an electric screwdriver, an electric hammer, an impact drill, a concrete vibrator and an electric planer.

## Claims

1. A battery pack, comprising:
a battery module comprising a pair of battery assemblies (1) stacked along a height direction;
wherein each of the battery assemblies (1) comprises a support tray (11) and a cell group (12); wherein the support tray (11) is penetrated with a plurality of through holes (111) along its own height direction; pressure relief valves of a plurality of cells in the cell group (12) are arranged at the plurality of through holes (111) in a one-to-one correspondence manner, and the pressure relief valves of a pair of cell groups (12) arranged along the height direction are arranged facing each other; the support tray (11) is further provided with a plurality of pressure relief holes (112);
a module bracket (2) arranged between a pair of the support trays (11) arranged along the height direction; wherein the module bracket (2) is provided with first pressure relief channels (21); wherein a pressure relief cavity (3) is provided between a pair of the support trays (11) arranged along the height direction; wherein the through holes (111), the pressure relief cavity (3), the first pressure relief channels (21) and the pressure relief holes (112) are in communication;
a box (6), wherein the battery module is arranged in the box (6); the box (6) is provided with third pressure relief channels (71); wherein the third pressure relief channels (71) are in communication with the pressure relief holes (112).

2. The battery pack according to claim 1, wherein each of the support trays (11) comprises a tray body (113) formed with a mounting groove and tray extension members (114) arranged at circumferential edges of the tray body (113); wherein each of the tray bodies (113) is provided with the plurality of through holes (111) running through its own height direction;
the pressure relief cavity (3) is formed between a pair of tray bodies (113) arranged along the height direction, and the module bracket (2) is arranged between a pair of tray extension members (114) arranged along the height direction.

3. The battery pack according to claim 2, wherein the tray extension member (114) and the module bracket (2) are both in a rectangular ring shape.

4. The battery pack according to claim 2, further comprising:
a fireproof board (5) arranged between a pair of the tray bodies (113) arranged along the height direction; wherein the through holes (111) of the upper tray body (113) and the through holes (111) of the lower tray body (113) are separated by the fireproof board (5).

5. The battery pack according to claim 4, wherein the fireproof board (5) is a mica board.

6. The battery pack according to any one of claims 2 to 5, wherein the box (6) is provided with side beams (7) and a plurality of first cross beams (4); wherein the side beams (7) are enclosed to form a frame structure; the side beams (7) are provided with the third pressure relief channels (71);
the plurality of the first cross beams (4) are arranged inside the frame structure and connected to the side beams (7); the plurality of the first cross beams (4) separate a plurality of areas within the frame structure, and each of the areas is provided with the battery module.

7. The battery pack according to claim 6, wherein the first cross beam (4) is provided with a second pressure relief channel (41); wherein the first pressure relief channel (21), the pressure relief hole (112), the second pressure relief channel (41) and the third pressure relief channel (71) are in communication.

8. The battery pack according to claim 7, wherein a pair of the support trays (11) arranged along the height direction are symmetrically arranged, and the tray extension member (114) located at a lower side is provided with the plurality of the pressure relief holes (112); wherein the pressure relief holes (112), the second pressure relief channel (41) and the third pressure relief channel (71).

9. The battery pack according to claim 6, wherein the side beam (7) is provided with an explosion-proof valve (72); wherein the explosion-proof valve (72) is communicated with the third pressure relief channel (71).

10. The battery pack according to claim 4 or 5, wherein the module bracket (2) and a pair of tray extension members (114) arranged along the height direction are connected by locking members (8) to clamp the fireproof board (5).
